# EUROPÄISCHE PATENTSCHRIFT

(11) **EP 2 142 819 B1**
(45) Veröffentlichungstag und Bekanntmachung des Hinweises auf die Patenterteilung: **14.06.2017**
(21) Anmeldenummer: 08735295.1
(22) Anmeldetag: 17.04.2008
(51) Int. Cl.: F16D 65/00, F16D 65/56

(54) **SCHEIBENBREMSE MIT LÖSESPINDEL FÜR DIE NACHSTELLEINRICHTUNG**
DISK BRAKE HAVING A RELEASE SPINDLE FOR THE ADJUSTMENT DEVICE
FREIN À DISQUE À TIGE DE DESSERRAGE POUR DISPOSITIF DE RATTRAPAGE D'USURE

(30) Priorität: 25.04.2007 DE 102007019440
(43) Veröffentlichungstag der Anmeldung: 13.01.2010
(73) Patentinhaber: KNORR-BREMSE Systeme für Nutzfahrzeuge GmbH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2008/003068
(87) Internationale Veröffentlichungsnummer: WO 2008/131864

(56) Entgegenhaltungen:
- EP-A- 1 596 092
- DE-C1- 19 923 457
- GB-A- 2 304 387

## Beschreibung

Die Erfindung betrifft eine Scheibenbremse, die einen Bremssattel umfasst, in dem eine Bremsscheibe und zwei beidseitig der Bremsscheibe angeordnete Bremsbeläge montiert sind, und die zur Kompensierung des Verschleißes der Bremsbeläge mit einer Nachstellvorrichtung ausgestattet ist, die mindestens eine Nachstellspindel aufweist, der eine beim Überschreiten eines bestimmten Drehmomentes ansprechende Rutschkupplung zugeordnet ist.

Eine derartige Bremse ist aus der EP 05 66 008 A1 und der EP 1 596 092 A1 bekannt.

Die in Rede stehende Fahrzeugbremse ist besonders für Nutzfahrzeuge ausgelegt. Besonders bei diesen Fahrzeugen werden die Bremsbeläge aufgrund der hohen abzubremsenden Massen stark belastet. Der Verschleiß der Bremsbeläge ist demzufolge entsprechend hoch. Die Nachstelleinrichtung ist so ausgelegt, dass entsprechend der Abnutzung der Bremsbeläge eine Nachstellung erfolgt.

Beim Wechseln der Bremsbeläge kann es aufgrund der Auslegung der Nachstelleinrichtung zum Überschreiten eines zulässigen Drehmomentes der inneren Mechanik kommen. Dieses Drehmoment wird über die manuelle Rückstelleinrichtung bzw. die Nachstellspindel eingeleitet. Wird dabei ein bestimmtes Drehmoment überschritten, spricht die Rutschkupplung an. Diese könnte auch als Sicherheits-oder Überlastkupplung bezeichnet werden. Bei der in Rede stehenden Scheibenbremse hat sie die Aufgabe, die Nachteile der Nachstelleinrichtung gegen eine Beschädigung oder gegen eine Zerstörung zu sichern.

Rutschkupplungen sind allgemein bekannt. Von der Funktion her unterscheidet man Reibkupplungen mit einer konstanten Anpresskraft, die jedoch auch einstellbar sein kann. Gemäß einer anderen Bauform werden auch sogenannten Lamellenkupplungen verwendet. Die Lamellen bestehen entweder aus Stahl, wobei sie jedoch auch mit Reibbelägen versehen sein können. Die Anpresskraft wird durch geeignete Federn erzeugt.

In der GB 2 304 387 wird ein Bremsenjustiermechanismus beschrieben, der mit einer Justierwelle ausgerüstet ist, die drehbar innerhalb eines Justiergehäuses gelagert ist. Das untere Ende der Justierwelle befindet sich in zusammenwirkender Beziehung mit Komponenten einer automatischen Justiereinrichtung, die verschiedenartig ausgebildet sein kann. Ein gegenüberliegender, oberer Abschnitt der Justierwelle bildet ein Vierkantprofil, auf das ein Stopfen mit einer inneren Vierkantausnehmung aufgestülpt ist. Dadurch wird ein Formschluss zwischen dem Stopfen und der Justierwelle gebildet. Der Stopfen ist am freien Ende mit einem Profil, vorzugsweise einem Sechskantprofil versehen. Im unteren Bereich ist der Stopfen mit in Längsrichtung verlaufenden Schlitzen versehen, so dass einzelne Segmente gebildet werden, die federnd sind, so dass der Stopfen in die Bohrung des Gehäuses eingesetzt werden kann. Die Sicherung erfolgt durch an den Segmenten angeformte Stege, die in eine Nut eingreifen.

Der Stopfen und die Justierwelle werden synchron bei einer normalen Betätigung der Justiereinrichtung gedreht. Wenn jedoch die Justiereinrichtung zurückgesetzt werden soll, um sie zu dejustieren, wird ein Schlüssel an dem Profil angesetzt und der Stopfen zusammen mit der Justierwelle in die Desjustierrichtung gedreht. Der Werkstoff des Stopfens ist so gewählt, dass bei einem vorgegebenen Drehmoment das Profil deformiert wird. Vorzugsweise ist der Stopfen aus einem geeigneten Kunststoff gefertigt.

Nachteilig ist bei dieser Ausführung, dass im Falle des Überschreitens des vorgegebenen Drehmomentes der Stopfen deformiert wird und ausgewechselt werden muss.

Der vorliegenden Erfindung liegt die Aufgabe zugrunde, eine Scheibenbremse der eingangs näher beschriebenen Art so zu gestalten, dass die Rutschkupplung in kostengünstiger Weise hergestellt werden kann, und dass sie entsprechend den bei Scheibenbremsen vorhandenen Einbaumöglichkeiten ausgelegt werden kann.

Die gestellte Aufgabe wird gelöst, indem die Rutschkupplung nach Art eines Sicherheitsadapters ausgebildet ist, der durch einen Presssitz kraftschlüssig auf den Endbereich jeder Nachstellspindel derart aufgesetzt ist, dass dieser beim Überschreiten eines bestimmten Drehmomentes gegenüber der Nachstellspindel verdrehbar ist, wobei der Außendurchmesser jeder Nachstellspindel gegenüber dem Innendurchmesser des Sicherheitsadapters und/oder, dass der Innendurchmesser des Sicherheitsadapters gegenüber dem Außendurchmesser der Nachstellspindel ein Übermaß aufweist.

In der Normalausführung der Scheibenbremse ist die Nachstelleinrichtung so ausgelegt, dass sie mit zwei parallel und im Abstand zueinander verlaufenden Nachstellspindeln ausgestattet ist. Diese sind über eine Synchronisationseinrichtung miteinander antriebstechnisch verbunden. Der Sicherheitsadapter wird demzufolge auf den der Synchronisationseinrichtung abgewandten Endbereich jeder Nachstellspindel aufgesetzt.

Bei dem Sicherheitsadapter handelt es sich um ein äußerst einfaches Bauteil, welches nach Art einer Hülse gestaltet ist und durch ein geeignetes Fertigungsverfahren mit der notwendigen Präzision hergestellt werden kann. Die Größe der den Kraftschluss bildenden Kräfte richtet sich nach dem Drehmoment, welches im normalen Betriebszustand der Bremse zu übertragen ist.

Gemäß einer bevorzugten Ausführung ist vorgesehen, dass die kraftschlüssige Verbindung zwischen der Nachstellspindel und dem Sicherheitsadapter durch einen Presssitz gebildet ist. Dieser Presssitz kann auf verschiedene Weise erreicht werden.

So ist vorgesehen, dass der Außendurchmesser der Nachstellspindel zumindest im Bereich des Sicherheitsadapters gegenüber dem Innendurchmesser des Sicherheitsadapters und/oder dass der Innendurchmesser des Sicherheitsadapters gegenüber dem Außendurchmesser der Stellspindel ein Übermaß aufweist. Unabhängig vom Übermaß wird jedoch der Sicherheitsadapter geweitet, wenn dieser auf den Endbereich der Nachstellspindel aufgepresst wird, da der Sicherheitsadapter zumindest über den Bereich, über den sich der Endbereich der Nachstellspindel erstreckt, hülsenförmig gestaltet ist, während der Endbereich der Nachstellspindel massiv ist. Bei den zuvor beschriebenen Möglichkeiten ist jedoch der Außendurchmesser der Nachstellspindel und der Innendurchmesser des Sicherheitsadapters als Kreis ausgebildet.

Gemäß einer weiteren Lösung ist vorgesehen, dass der Presssitz zwischen dem Endbereich der Nachstellspindel und dem Sicherheitsadapter durch eine von der Kreisform abweichende Außenkontur der Nachstellspindel und/oder der Innenkontur des Sicherheitsadapters gebildet ist.

Diese Ausführung bietet den Vorteil, dass beim Aufpressen des Sicherheitsadapters auf den Endbereich der Nachstellspindel eine elastische Verformung des Sicherheitsadapters und/oder des Endbereiches der Nachstellspindel erfolgt, so dass die kraftschlüssige Verbindung besonders innig ist. Sofern der Endbereich der Nachstellspindel kreisrund ist, verformt sich der Sicherheitsadapter beim Aufpressen zu einer Kreiskontur. Da bei dieser Methode die Presskräfte nicht ausschließlich durch Aufweitung des Sicherheitsadapters erfolgen, sondern auch noch Biegespannungen in Folge der Verformung der Kontur des Sicherheitsadapters auftreten, kann der Endbereich der Nachstellspindel ein relativ großes Übermaß haben, woraus sich der Vorteil ergibt, dass die Toleranzen größer sein können.

Der Sicherheitsadapter wird in bevorzugter Ausführung aus einem besonders duktilen und zähen Material hergestellt. Sofern der Endbereich der Nachstellspindel gegenüber der Bohrung des Sicherheitsadapters ein Übermaß aufweist, erfolgt eine plastische Verformung des Sicherheitsadapters, d.h. der Bohrungsdurchmesser vergrößert sich beim Aufpressvorgang in Anpassung an den Istdurchmesser des Endbereiches der Nachstellspindel bleibend, wodurch eine Restspannkraft in der Pressverbindung bestimmt ist. Diese Restspannkraft wird durch die Fließgrenze des für den Sicherheitsadapter gewählten Materials bestimmt.

In Weiterführung dieses Gedankens ist vorgesehen, dass, bezogen auf den getrennten Zustand des Adapters von dem Endbereich der Nachstellspindel die Außenkontur des Endbereiches der Nachstellspindel und/oder die Innenkontur des Sicherheitsadapters nach Art eines Polygons gestaltet sind. Dieses Polygon ist in bevorzugter Ausführung ein Oval, eine Ellipse oder ein Dreieck- oder Viereck-Polygon, wobei die Abweichungen von der Kreisform relativ gering sind.

Da in bevorzugter Ausführung beim Aufpressen des Sicherheitsadapters auf den Endbereich der Nachstellspindel der Sicherheitsadapter verformt wird, ist vorgesehen, dass dieser als ein im Tiefzieh-Verfahren hergestelltes Blechformteil ausgebildet ist. In einer anderen Ausführung ist es jedoch auch möglich, dass der Sicherheitsadapter als ein durch Kaltverformung hergestelltes Formteil ausgebildet ist. Dieses Formteil könnte beispielsweise mittels eines geeigneten Werkzeuges hergestellt werden. Ferner könnte der Sicherheitsadapter ein im Sinterverfahren hergestelltes Formteil sein.

Damit bei einer eventuell auftretenden Beschädigung des Adapters oder beim Verlust die Nachstelleinrichtung noch zurückgestellt werden kann, ist vorgesehen, dass der den Sicherheitsadapter zugeordnete Endbereich der Nachstellspindel mit einer mehreckigen Ausnehmung, vorzugsweise mit einem Innensechskant versehen ist.

Der Sicherheitsadapter ist so gestaltet, dass er gegenüber der Stirnfläche der Nachstellspindel übersteht, und dass der überstehende Bereich zumindest über eine bestimmte Länge mehreckig ausgebildet ist, vorzugsweise als Außensechskant gestaltet ist.

Anhand der beiliegenden Zeichnungen wird die Erfindung noch näher erläutert.

Es zeigen:
- Figur 1: die Zuspanneinrichtung und die innerhalb des Bremssattels angeordnete Bremsscheibe und die Bremsbeläge im Längsschnitt,
- Figur 2: eine Einzelheit einer Nachstellspindel, die Pressverbindung des Endbereiches einer Nachstellspindel mit dem Sicherheitsadapter in Schnittdarstellung und
- Figur 3: eine Prinzipskizze, das Übermaß zwischen dem Endbereich der Nachstellspindel und dem Sicherheitsadapter zeigend.

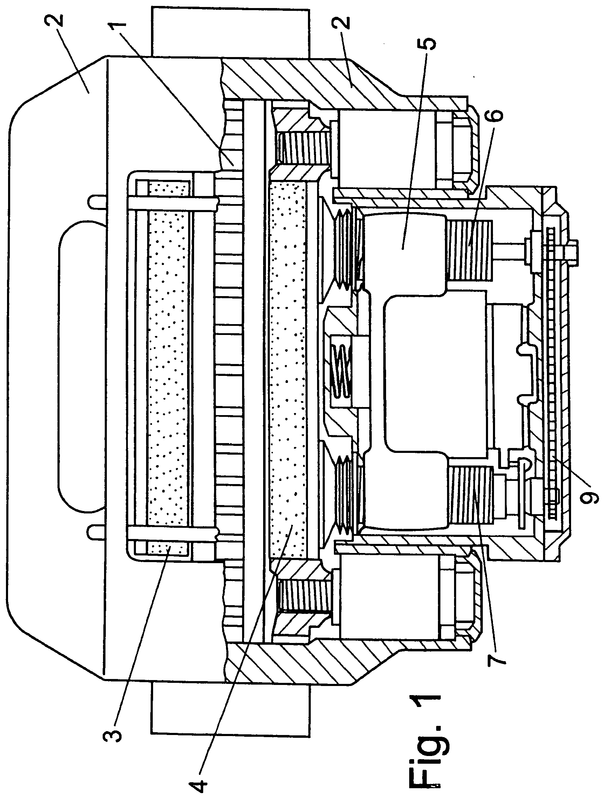

Die Figur 1 zeigt, dass eine auf einer nicht dargestellten Achse eines Nutzfahrzeuges aufgesetzte Bremsscheibe 1 in einem Bremssattel 2 angeordnet ist. Beidseitig der Bremsscheibe 1 sind die Bremsbeläge 3, 4 montiert. Die Scheibenbremse ist ferner vorzugsweise mit einer Traverse 5 ausgestattet, in der zwei parallel und im Abstand zueinander angeordnete Nachstellspindeln 6, 7 montiert sind. Durch das Bezugszeichen 8 ist die gesamte Zuspannvorrichtung bezeichnet. Die beiden Nachstellspindeln 6, 7 sind über eine Synchronisationseinrichtung, im dargestellten Ausführungsbeispiel durch einen Kettentrieb 9, synchron miteinander gekoppelt. Eine komplette Scheibenbremse ist beispielsweise in der EP 0 566 008 A1 beschrieben.

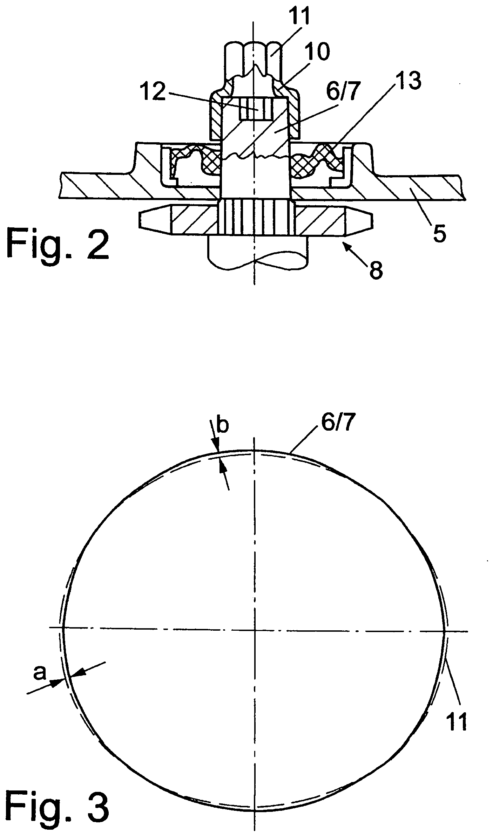

Die Figur 2 zeigt die in der Traverse 5 drehbar gelagerte bzw. verschraubbar gelagerte Nachstellspindel 6 bzw. 7, die mit einem Sicherheitsadapter 10 versehen ist, der auf einen freien Endbereich aufgestülpt ist. Die Verbindung erfolgt kraftschlüssig durch einen Presssitz, so dass die Nachstellspindel 6, 7 ein bestimmtes Drehmoment auf den Sicherheitsadapter 10 übertragen kann. Bei Überschreiten dieses Drehmomentes - beim Lösen der Nachstellspindel 6 oder 7 - verdreht sich der Sicherheitsadapter 10 gegenüber der jeweiligen Nachstellspindel 6 oder 7, so dass die inneren Bauteile der Zuspanneinrichtung 8 gegen Zerstörung oder Bruch geschützt sind. Der Sicherheitsadapter 10 steht gegenüber der freien Stirnfläche jeder Nachstellspindel 6, 7 vor und dieser überstehende Bereich ist im dargestellten Ausführungsbeispiel als Außensechskant 11 ausgebildet. Jede Nachstellspindel 6, 7 ist in dem von dem Sicherheitsadapter 10 umgriffenen Bereich mit einer Ausnehmung versehen, die im dargestellten Ausführungsbeispiel als Innensechskant 12 ausgebildet ist. Dadurch ist im Falle des Bruches des Sicherheitsadapters 10 die Möglichkeit gegeben, die gesamte Nachstelleinrichtung zurückzudrehen.

In die Traverse 5 ist noch ein Wellendichtring 13 eingesetzt.

Die Figur 3 verdeutlicht das Übermaß, welches durch die Innenfläche des Sicherheitsadapters 10 gebildet ist. Gemäß dieser Prinzipskizze ist die Außenfläche zumindest im Endbereich jeder Nachstellspindel 6, 7 kreisrund, während die Innenfläche des Sicherheitsadapters 10 ein Polygon beschreibt. Beim Aufpressen des Sicherheitsadapters 10 auf die jeweilige Nachstellspindel 6, 7 passt sich diese Innenkontur der Außenfläche der Nachstellspindel 6 bzw. 7 an. Durch "a" ist das Übermaß des Sicherheitsadapters 10 gekennzeichnet, durch "b" das Übermaß des Endbereiches der Nachstellspindel 6, 7. Damit eine Pressverbindung erreicht wird, ist es notwendig, dass das Übermaß "b" der Nachstellspindel 6, 7 größer ist als das Übermaß "a" des Sicherheitsadapters 10.

Die Erfindung ist nicht auf das dargestellte Ausführungsbeispiel beschränkt. Wesentlich ist, dass das Sicherheitselement zum Schutz der inneren Bauteile der Zuspannvorrichtung 8 durch einen auf den Endbereich jeder Nachstellspindel 6, 7 aufgepressten Sicherheitsadapter 10 erfolgt, der beim Überschreiten eines bestimmten Drehmomentes sich gegenüber der Nachstellspindel 6 bzw. 7 verdreht.

## Patentansprüche

1. Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstellvorrichtung ausgestattet ist, die mindestens eine Nachstellspindel (6, 7) aufweist, der eine beim Überschreiten eines bestimmten Drehmomentes ansprechende Rutschkupplung zugeordnet ist, wobei die Rutschkupplung nach Art eines Sicherheitsadapters (10) ausgebildet ist, **dadurch gekennzeichnet, dass** der Sicherheitsadapter (10) unter Bildung eines Presssitzes kraftschlüssig auf den Endbereich jeder Nachstellspindel (6, 7) derart aufgesetzt ist, dass dieser beim Überschreiten des bestimmten Drehmomentes gegenüber der Nachstellspindel (6, 7) verdrehbar ist.

2. Scheibenbremse nach Anspruch 1, **dadurch gekennzeichnet, dass** der Außendurchmesser jeder Nachstellspindel (6, 7) gegenüber dem Innendurchmesser des Sicherheitsadapters (10) ein Übermaß aufweist.

3. Scheibenbremse nach Anspruch 1 oder 2, **dadurch gekennzeichnet, dass** der Presssitz zwischen dem Sicherheitsadapter (10) und der Nachstellspindel (6, 7) durch eine von der Kreisform abweichende Außenkontur der Nachstellspindel (6, 7) und/oder der Innenkontur des Sicherheitsadapters (10) gebildet ist.

4. Scheibenbremse nach Anspruch 3, **dadurch gekennzeichnet, dass** die Außenkontur der Nachstellspindel (6, 7) und/oder der Innenkontur des Sicherheitsadapters (10) als Oval gestaltet ist.

5. Scheibenbremse nach Anspruch 3, **dadurch gekennzeichnet, dass** die Außenkontur der Nachstellspindel (6, 7) und/oder die Innenkontur des Sicherheitsadapters (10) nach Art eines Polygons gestaltet sind.

6. Scheibenbremse nach Anspruch 5, **dadurch gekenntzeichnet, dass** jedes Polygon als Dreieck- oder Viereckpolygon gestaltet ist.

7. Scheibenbremse nach einem oder mehreren der vorstehenden Ansprüche, **dadurch gekennzeichnet, dass** der Sicherheitsadapter (10) als ein im Tiefziehverfahren hergestelltes Blechformteil ausgebildet ist.

8. Scheibenbremse nach einem oder mehreren der vorstehenden Ansprüche, **dadurch gekennzeichnet, dass** der Sicherheitsadapter (10) als ein durch Kaltverformung oder durch ein Sinterverfahren hergestelltes Formteil ausgebildet ist.

9. Scheibenbremse nach einem oder mehreren der vorstehenden Ansprüche, **dadurch gekennzeichnet, dass** der dem Sicherheitsadapter (10) zugeordnete Endbereich der Nachstellspindel (7, 8) mit einer mehreckigen Ausnehmund, vorzugsweise mit einem Innensechskant versehen ist.

10. Scheibenbremse nach einem oder mehreren der vorstehenden Ansprüche, **dadurch gekennzeichnet, dass** der Sicherheitsadapter (10) gegenüber der Stirnfläche der Stellspindel (6, 7) vorsteht und dass der überstehende Bereich zumindest über eine bestimmte Länge als Vielkant, vorzugsweise als Sechskant ausgebildet ist.

## Claims

1. Disc brake which comprises a brake calliper (2), into which are installed a brake disc (1) and two brake pads (3, 4) located on either side of the brake disc (1), and which, for compensating the wear of the brake pads (3, 4), is provided with a readjustment device having at least one adjusting spindle (6, 7), to which is assigned a slipping clutch responding to the exceeding of a defined torque, the slipping clutch being designed in the manner of a safety adapter (10), **characterised in that** the safety adapter (10) is non-positively fitted to the end region of each adjusting spindle (6, 7) while forming a press fit in such a way that it can be rotated against the adjusting spindle (6, 7) if the defined torque is exceeded.

2. Disc brake according to claim 1, **characterised in that** the outer diameter of each adjusting spindle (6, 7) is oversize relative to the inner diameter of the safety adapter (10).

3. Disc brake according to claim 1 or 2, **characterised in that** the press fit between the safety adapter (10) and the adjusting spindle (6, 7) is provided by an outer contour of the adjusting spindle (6, 7) and/or an inner contour of the safety adapter (10) which is/are non-circular.

4. Disc brake according to claim 3, **characterised in that** the outer contour of the adjusting spindle (6, 7) and/or an inner contour of the safety adapter (10) is/are designed to be oval.

5. Disc brake according to claim 3, **characterised in that** the outer contour of the adjusting spindle (6, 7) and/or an inner contour of the safety adapter (10) is/are designed in the manner of a polygon.

6. Disc brake according to claim 5, **characterised in that** each polygon is designed as a triangular or quadrangular polygon.

7. Disc brake according to one or more of the preceding claims, **characterised in that** the safety adapter (10) is a sheet metal moulding produced in a deep-drawing process.

8. Disc brake according to one or more of the preceding claims, **characterised in that** the safety adapter (10) is a moulding produced by cold forming or in a sintering process.

9. Disc brake according to one or more of the preceding claims, **characterised in that** the end region of the adjusting spindle (6, 7) which is assigned to the safety adapter (10) is provided with a polygonal recess, preferably with a hexagon socket.

10. Disc brake according to one or more of the preceding claims, **characterised in that** the safety adapter (10) projects beyond the end face of the adjusting spindle (6, 7), and **in that** the projecting region is designed as a polygon, preferably as a hexagon, at least along a defined length.

## Revendications

1. Frein à disque, qui comprend un étrier (2) de frein, dans lequel sont montés un disque (1) de frein et deux garnitures (3, 4) de frein disposées des deux côtés du disque (1) de frein et qui est, pour la compensation de l'usure des garnitures (3, 4) de frein, équipé d'un dispositif de rattrapage, qui a au moins une broche (6, 7) de rattrapage à laquelle est associé un embrayage à friction réagissant au dépassement d'un couple déterminé, dans lequel l'embrayage à friction est constitué à la manière d'un adaptateur (10) de sécurité, **caractérisé en ce que** l'adaptateur (10) de sécurité est, avec formation d'un ajustement avec serrage, mis à complémentarité de force sur la partie d'extrémité de chaque broche (6, 7) de rattrapage, de manière à ce que celui-ci puisse subir une torsion par rapport à la broche (6, 7) de rattrapage, si le couple déterminé est dépassé.

2. Frein à disque suivant la revendication 1, **caractérisé en ce que** le diamètre extérieur de chaque broche (6, 7) de rattrapage a un dépassement par rapport au diamètre intérieur de l'adaptateur (10) de sécurité.

3. Frein à disque suivant la revendication 1 ou 2, **caractérisé en ce que** l'ajustement avec serrage, entre l'adaptateur (10) de sécurité et la broche (6, 7) de rattrapage, est formé par un contour extérieur, s'écartant de la forme circulaire, de la broche (6, 7) de rattrapage et/ou du contour intérieur de l'adaptateur (10) de sécurité.

4. Frein à disque suivant la revendication 3, **caractérisé en ce que** le contour extérieur de la broche (6, 7) de rattrapage et/ou le contour intérieur de l'adaptateur (10) de sécurité est ovale.

5. Frein à disque suivant la revendication 3, **caractérisé en ce que** le contour extérieur de la broche (6, 7) de rattrapage et/ou le contour intérieur de l'adaptateur (10) de sécurité sont conformés à la manière d'un polygone.

6. Frein à disque suivant la revendication 5, **caractérisé en ce que** chaque polygone est conformé en triangle ou en rectangle.

7. Frein à disque suivant l'une ou plusieurs des revendications précédentes, **caractérisé en ce que** l'adaptateur (10) de sécurité est constitué sous la forme d'une pièce de forme en tôle fabriquée par un procédé d'emboutissage profond.

8. Frein à disque suivant l'une ou plusieurs des revendications précédentes, **caractérisé en ce que** l'adaptateur (10) de sécurité est constitué sous la forme d'une pièce de forme fabriquée par formage à froid ou par un procédé de frittage.

9. Frein à disque suivant l'une ou plusieurs des revendications précédentes, **caractérisé en ce que** la partie d'extrémité, associée à l'adaptateur (10) de sécurité, de la broche (7, 8) de rattrapage, est pourvue d'un évidement à plusieurs coins, de préférence d'un six pans intérieur.

10. Frein à disque suivant l'une ou plusieurs des revendications précédentes, **caractérisé en ce que** l'adaptateur (10) de sécurité est en saillie par rapport à la face frontale de la broche (6, 7) de réglage et **en ce que** la partie en saillie est constituée, au moins sur une certaine longueur, sous la forme d'un plusieurs pans, de préférence sous la forme d'un six pans.
